# EUROPEAN PATENT SPECIFICATION

(11) **EP 2 722 229 B1**
(45) Date of publication and mention of the grant of the patent: **15.05.2019**
(21) Application number: 13188987.5
(22) Date of filing: 16.10.2013
(51) Int. Cl.: B60Q 1/38, B62J 6/00, B60Q 1/00

(54) **Turn indicator lamp and a saddle-straddling type motor vehicle including the same**
Blinker und Kraftfahrzeug mit einem Sattel und einem solchen Blinker
Indicateur de changement de direction et véhicule automobile possédant une selle et cet indicateur

(30) Priority: 19.10.2012 JP 2012231462
(43) Date of publication of application: 23.04.2014
(73) Proprietor: Yamaha Hatsudoki Kabushiki Kaisha, Shizuoka-ken 438-8501 (JP)
(72) Inventor: Fujisaka, Masahiko, Shizuoka-ken, 438-8501 (JP); Horiguchi, Takashi, Tokyo, 153-8636 (JP); Todoroki, Norihide, Tokyo, 153-8636 (JP)
(74) Representative: Zimmermann, Tankred Klaus

(56) References cited:
- EP-A1- 2 080 695
- EP-A2- 1 428 745
- JP-A- 2006 069 299
- US-A1- 2005 185 415

## Description

### BACKGROUND OF THE INVENTION

### Field of the Invention

The present invention relates to a turn indicator lamp and a saddle-straddling type motor vehicle that includes the turn indicator lamp.

### Description of Related Art

Various configurations have been suggested as a turn indicator lamp that shows a moving direction of a motorcycle. A turn indicator described in JP 4247137 B mainly includes a body, a lens, a reflector and a bulb. The body is provided to project sideward of a vehicle body.

The base end of the bulb is supported by the body. A reflector is integrally bonded to the lens, and an inner space is formed between the reflector and the lens. The reflector has a base. An insertion hole that communicates with the inner space and the outside of the reflector and the lens is formed at the base of the reflector. The integrally bonded reflector and the lens are attached to the body while the bulb is supported by the body. In this case, the bulb is arranged in the inner space through the insertion hole of the reflector from the outside of the lens.

A lighting device of the motorcycle described in JP 4247137 B has a leg portion and a light main body. The leg portion is attached to a rear fender of the motorcycle. The light main body mainly includes a light case, a lens and a reflector. The light case is attached to the tip end of the leg portion.

EP 2 080 695 A1 shows a turn indicator lamp according to the preamble of claim 1, and teaches a flasher including a lens, a cover mated with the lens, and a leg for coupling the cover with a vehicle body. The surface on which the cover is mated with the lens is slanted in relation to the directions in which the leg extends, and the lens has a smaller dimension along the widthwise direction of a straddle type vehicle than that along the lengthwise direction of the straddle type vehicle.

JP 2006 069299 A discloses a rear view mirror comprising a mirror case with a built-in turn-signal lamp. A support column for supporting the mirror case is formed in hollow shape so that a lead wire extending from the turn-signal lamp can be inserted therein. A base part for attaching the support column to a front cowling is provided.

US 2005/185415 A1 teaches a rear mirror assembly including a turn indicator light and a position light. A light body for the turn indicator light is a filament light bulb and a light body for the position light is a light emitting diode. The vehicle width is made to be more recognizable by providing the position light in the rear view mirror assembly. The turn indicator light and the position light are provided with individual light bodies, respectively, allowing an independent service job to be performed for each.

### BRIEF SUMMARY OF THE INVENTION

An object of the present invention is to provide a turn indicator lamp in which it is possible to easily and smoothly perform replacement work of a light emitter without damaging the light emitter and a saddle-straddling type motor vehicle that includes the turn indicator lamp.

This object is achieved by a turn indicator lamp according to claim 1, and by a saddle-straddling type motor vehicle according to claim 13.

In the turn indicator described in JP 4247137 B, at the time of replacing the bulb, the reflector and the lens are integrally removed from the body, and the used bulb is removed from the body. Subsequently, the new bulb is attached to the body. Thereafter, the reflector and the lens are attached to the body again. At this time, an operator needs to position the reflector and the lens such that the new bulb attached to the body passes through the insertion hole of the reflector.

However, it is difficult for the operator to confirm the insertion hole of the reflector because the reflector and the lens are integrally bonded. Therefore, at the time of attaching the reflector and the lens to the body, part of the reflector and the lens may come into contact with the bulb, thereby causing damage to the bulb.
(1) According to one aspect of the present invention, a turn indicator lamp provided at a vehicle main body includes a light emitter having a wiring connector to which a wiring for a current supply is connected, a reflector member having a reflection surface that reflects light emitted from the light emitter, a lens supported at the reflector member to be opposite to at least part of the reflection surface, and a main body member that includes a storage with a storage space storing the reflector member and at least part of the light emitter, and a main body supporter supporting the storage at the vehicle main body, wherein the storage has a first opening that opens in a first direction and a second opening that opens in a second direction that intersects with the first direction, the storage space communicating with an inner space of the main body supporter through the second opening, the reflector member has a support hole, and the light emitter is inserted into the support hole such that the light emitter is supported by the support hole, the reflector member is provided such that the light emitted from the light emitter and the light reflected from the reflection surface of the reflector member are emitted to outside through the lens from the first opening, the support hole of the reflector member is formed such that a central axis of the support hole is inclined with respect to the first direction and part of the wiring connector of the light emitter supported by the support hole is positioned in the inner space of the main body supporter and in the second opening, and the main body supporter is configured to lead the wiring coming from the vehicle main body to the wiring connector.

In the turn indicator lamp, the lens is supported at the reflector member to be opposite to at least part of the reflection surface. Further, the light emitter is inserted into the support hole of the reflector member such that the light emitter is supported by the support hole. In the support hole of the reflector member, the central axis of the support hole is inclined with respect to the first direction. The wiring connector of the light emitter supported by the support hole is directed toward the second opening. The wiring coming from the vehicle main body is led to the wiring connecter directed toward the second opening by the main body supporter.

At the time of removing the light emitter, the lens and the reflector member are removed from the first opening of the storage together with the light emitter such that the wiring connector of the light emitter is moved away from the second opening of the storage. In this case, the wiring coming from the vehicle main body is smoothly pulled out from the second opening in a direction inclined with respect to the first direction without being bent. Thereafter, the light emitter is removed from the support hole of the reflector member.

At the time of attaching the light emitter, the light emitter is inserted into the support hole of the reflector member. The lens and the reflector member are attached to the first opening of the storage while the lens is supported at the reflector member such that the wiring connector of the light emitter comes closer to the second opening of the storage. Thus, the wiring connected to the wiring connector is smoothly inserted into the second opening of the storage without being bent.

In this case, the light emitter is removed from the storage of the main body member or attached to the storage of the main body member while being supported between the lens and the reflector member, whereby the light emitter does not come into contact with the main body member.

Therefore, it is possible to easily and smoothly perform the replacement work of the light emitter without damaging the light emitter.
(2) The light emitter may include a socket that includes the wiring connector and a bulb attached to the socket to be attachable and detachable, and the socket may be configured to be supportable at the support hole of the reflector member.

In this case, the socket to which the bulb is attached is inserted into the support hole of the reflector member such that the bulb can be supported between the lens and the reflector member. Further, the socket to which the bulb is attached is pulled out from the support hole of the reflector member such that the bulb can be taken out from between the lens and the reflector member. Further, it is possible to easily replace the bulb without replacing the socket and the wiring by removing the bulb from the socket.
(3) The socket and the bulb may be arranged to line up on a straight line that includes a central axis of the support hole while the socket to which the bulb is attached is supported at the support hole of the reflector member.

In this case, at the time of inserting the socket to which the bulb is attached into the support hole of the reflector member, the bulb can be easily and smoothly inserted into the support hole. Further, at the time of pulling out the socket to which the bulb is attached from the support hole of the reflector member, the bulb can be easily and smoothly taken out from the support hole.
(4) A portion of the wiring connected to the wiring connector of the socket may extend on the straight line that includes the central axis of the support hole of the reflector member, or may extend in parallel to the straight line that includes the central axis of the support hole.

In this case, at the time of removing the light emitter, the portion of the wiring coming from the vehicle main body connected to the wiring connector of the socket is smoothly pulled out in a direction parallel to the central axis of the support hole. Further, at the time of attaching the light emitter, the portion of the wiring coming from the vehicle main body connected to the wiring connector of the socket is smoothly inserted into the second opening of the storage in the direction parallel to the central axis of the support hole.
(5) The lens, the light emitter and the reflector member may be configured to be integrally attachable to and removable from the main body member.

In this case, it is possible to easily attach the light emitter, the lens and the reflector member to and remove the light emitter, the lens and the reflector member from the main body member without damaging the light emitter.
(6) The reflector member and the lens may be bonded by welding.

In this case, the reflector member and the lens can be easily and reliably integrated. Further, the light emitter can be protected from rain water or muddy water.
(7) The reflector member may have a lens supporter that supports the lens, and the light emitter may be supported by the support hole to be positioned further inside the reflector member than the lens supporter in the first direction.

In this case, a distance between the light emitter and the lens in the first direction is longer than a distance between the light emitter and the reflector member. Therefore, the lens is unlikely influenced by heat generated from the light emitter as compared to the reflector member. Thus, the lens can be prevented from being melt by the heat of the light emitter. Further, material that is less heat resistant than the material for the reflector member can be used as the material for the lens.
(8) A wiring storage space that leads the wiring coming from the vehicle main body to the wiring connector may be formed inside the main body supporter, and another part of the wiring connector of the light emitter supported by the support hole may be positioned in the wiring storage space of the main body supporter.

In this case, the wiring coming from the vehicle main body is led to the wiring connector through the wiring storage space of the main body supporter. Thus, the wiring is protected. Further, a distance between the light emitter and the vehicle main body becomes shorter, so that an amplitude of the vibration of the light emitter due to vibration of the vehicle main body can be reduced. As a result, damage to the light emitter due to vibration can be prevented.
(9) The storage and the main body supporter may be constituted by members different from each other, and a coefficient of elasticity of material for the main body supporter may be less than a coefficient of elasticity of material for the storage.

In this case, the main body supporter functions as a damper, so that vibration of the vehicle main body is absorbed by the main body supporter. Thus, vibration transmitted to the light emitter is attenuated. Therefore, damage to the light emitter due to vibration can be prevented.
(10) The reflector member may be fixed to the main body member by a bolt.

In this case, even when an allowance is provided between the measurement of the reflector member and the measurement of the main body member, the reflector member can be firmly fixed to the main body member by fastening the bolt. Further, the reflector member can be removed from the main body member with a small force by removing the bolt, whereby the wiring connected to the wiring connector is prevented from being pulled out with a large force. Thus, damage to the wiring can be prevented.
(11) An abutment surface that abuts against a surface of the reflector member may be formed at a surface of the storage, and the storage may be formed such that at least part of a portion opposite to the abutment surface gradually comes closer to the abutment surface inward from the first opening.

In this case, at the time of attaching the reflector member to the main body member, the surface of the reflector member abuts against at least part of the abutment surface of the storage and the portion opposite to the abutment surface such that the reflector member is smoothly introduced to an appropriate position. Therefore, the attachment work of the reflector member to the main body member becomes easier. As a result, maintainability of the turn indicator lamp is improved.
(12) The reflector member may be configured to be attachable to the main body member such that the wiring connecter of the light emitter supported by the support hole is rotated in a plane that includes the first and second directions with a portion of the storage as a supporting point while being inserted into the second opening.

In this case, the reflector member is rotated with the portion of the storage of the main body member as the supporting point such that it is possible to easily attach the reflector member to the main body member without letting the wiring connector of the light emitter interfere with the storage. Thus, maintainability of the turn indicator lamp is improved.
(13) According to another aspect of the present invention, the saddle-straddling type motor vehicle includes the vehicle main body, and a turn indicator lamp according to the first invention provided at the vehicle main body.

The saddle-straddling type motor vehicle includes the turn indicator lamp according to one aspect of the present invention. Therefore, it is possible to easily and smoothly perform the replacement work of the light emitter without damaging the light emitter.
(14) The first direction may be a forward direction or a rearward direction of the vehicle main body, and the second direction may be a rightward direction or a leftward direction of the vehicle main body.

In this case, the light emitted from the light emitter and the light reflected from the reflection surface of the reflector member are emitted in a forward direction or a rearward direction of the vehicle main body through the lens from the first opening.

Further, the second direction is a rightward direction or a leftward direction of the vehicle main body, so that the replacement work of the light emitter can be performed on the side of the vehicle main body.

Other features, elements, characteristics, and advantages of the present invention will become more apparent from the following description of preferred embodiments of the present invention with reference to the attached drawings.

### BRIEF DESCRIPTION OF THE SEVERAL VIEWS OF THE DRAWING

Fig. 1 is a side view of one side of a motorcycle according to one embodiment of the present invention;
Fig. 2 is a plan view of the motorcycle of Fig. 1 viewed from above;
Fig. 3 is an external perspective view of a front left turn indicator lamp of Figs. 1 and 2;
Fig. 4 is an exploded perspective view of the turn indicator lamp of Fig. 3;
Fig. 5 is a front view of the turn indicator lamp of Fig. 3;
Fig. 6 is a plan view of the turn indicator lamp of Fig. 3;
Fig. 7 is a bottom view of the turn indicator lamp of Fig. 3;
Fig. 8 is a side view of the turn indicator lamp of Fig. 3 as viewed from one side;
Fig. 9 is a transverse sectional view taken along the line A-A of the turn indicator lamp of Fig. 5;
Fig. 10 is a vertical cross sectional view taken along the line B-B of the turn indicator lamp of Fig. 6;
Fig. 11 is a vertical cross sectional view taken along the line C-C of the turn indicator lamp of Fig. 5;
Figs. 12(a) to 12(d) are diagrams showing the details of mounting structure of a light emitter to a reflector member;
Fig. 13 is a diagram for explaining replacement work of a bulb in the turn indicator lamp according to one embodiment of the present invention;
Figs. 14(a) to 14(c) are diagrams for explaining the replacement work of the bulb in the turn indicator lamp according to one embodiment of the present invention; and
Fig. 15 is a diagram showing a plurality of guide portions formed at an inner surface of a main body storage.

### DESCRIPTION OF THE PREFERRED EMBODIMENTS

A saddle-straddling type motor vehicle according to one embodiment of the present invention will be described below with reference to the drawings. In the following description, a motorcycle will be described as one example of the saddle-straddling type motor vehicle.

### (1) Schematic Configuration of Motorcycle

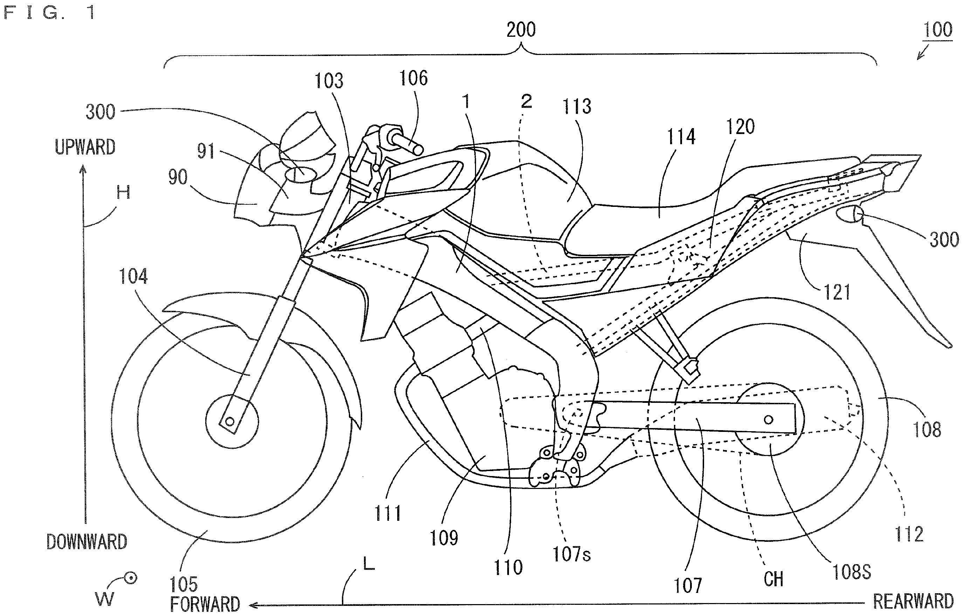

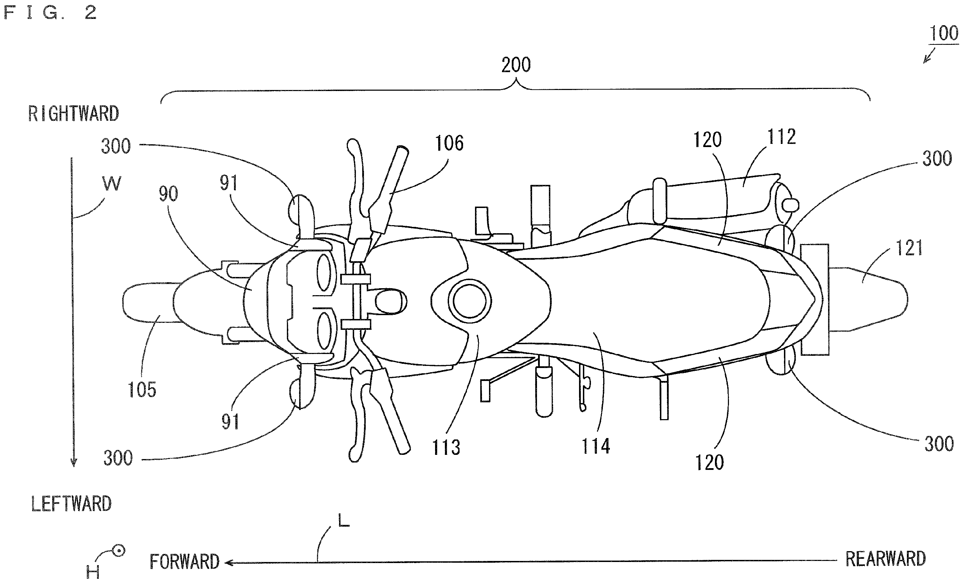

Fig. 1 is a side view of one side of the motorcycle according to one embodiment of the present invention, and Fig. 2 is a plan view of the motorcycle 100 of Fig. 1 as viewed from above. Figs. 1 and 2 show the motorcycle 100 being stood up to be vertical to a road surface. In each diagram of Fig. 1 and the subsequent diagrams, the arrows denote the front and rear direction L, the width direction W and the up-and-down direction H of the motorcycle 100. In the following description, a direction directed by an arrow in the front and rear direction L is referred to as a forward direction, and its opposite direction is referred to as a rearward direction. Further, a direction directed by an arrow in the width direction W is referred to as a leftward direction, and its opposite direction is referred to as a rightward direction. Further, a direction directed by an arrow in the up-and-down direction H is referred to as an upward direction, and its opposite direction is referred to as a downward direction.

As shown in Fig. 1, the motorcycle 100 includes a main frame 1 and a sub-frame 2. The sub-frame 2 is attached to the rear end of the main frame 1 to extend rearward.

A head pipe 103 is provided at the front end of the main frame 1. A front fork 104 is provided at the head pipe 103 to be swingable to the right and left. A head light 90 is attached in the vicinity of the upper end of the front fork 104. The head light 90 is positioned in front of the head pipe 103. A head light cover 91 is provided to cover the both sides of the head light 90.

As shown in Fig. 1, a front wheel 105 is supported at the lower end of the front fork 104 to be rotatable. A handle 106 is attached to the upper end of the head pipe 103.

An engine 109 is provided in the vicinity of the lower end of the main frame 1. One end of an intake pipe 110 is attached to an intake port of the engine 109, and one end of an exhaust port 111 is attached to an exhaust port of the engine 109. A muffler 112 is attached to the other end of the exhaust pipe 111.

The sub-frame 2 is positioned above the engine 109. A fuel tank 113 is supported by the sub-frame 2 at a position above the engine 109. A seat 114 is supported by the sub-frame 2 at a position behind the fuel tank 113. The seat 114 of this example is a seat in which two seating portions for two riders are integrally formed. A rider who operates the motorcycle 100 can sit in the front portion of the seat 114. Further, a rider who does not operate the motorcycle 100 can sit in the rear portion of the seat 114.

A rear arm 107 is provided to extend rearward from the lower portion of the main frame 1. The front end of the rear arm 107 is attached to the main frame 1 via a support shaft 107s. The rear end of the rear arm 107 holds a rear wheel 108 and a rear wheel driven sprocket 108S to be rotatable. A chain CH is attached to the rear wheel driven sprocket 108S.

A pair of side covers 120 is attached to cover the outside of the sub-frames 2 in the width direction W of the motorcycle 100. Further, a cover member 121 is attached at the lower portions of the pair of sub-frames 2 to cover the entire upper portion of the rear wheel 108 from above the rear wheel 108.

As shown in Fig. 2, a pair of turn indicator lamps 300 is provided to project to the both sides from the head light covers 91 in the width direction W of the motorcycle 100. Further, the pair of turn indicator lamps 300 is provided to project to the both sides from the cover member 121 in the width direction W of the motorcycle 100. In the following description, in the motorcycle 100 shown in Figs. 1 and 2, an assembly of the constituent elements except for the turn indicator lamps 300 is referred to as a vehicle main body 200.

### (2) Configuration of Turn Indicator Lamp

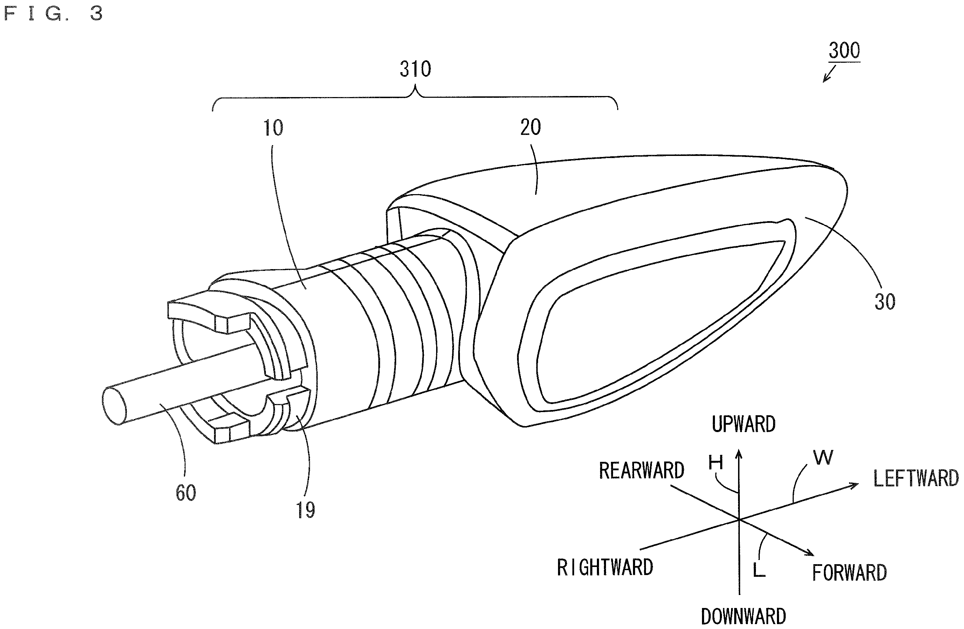

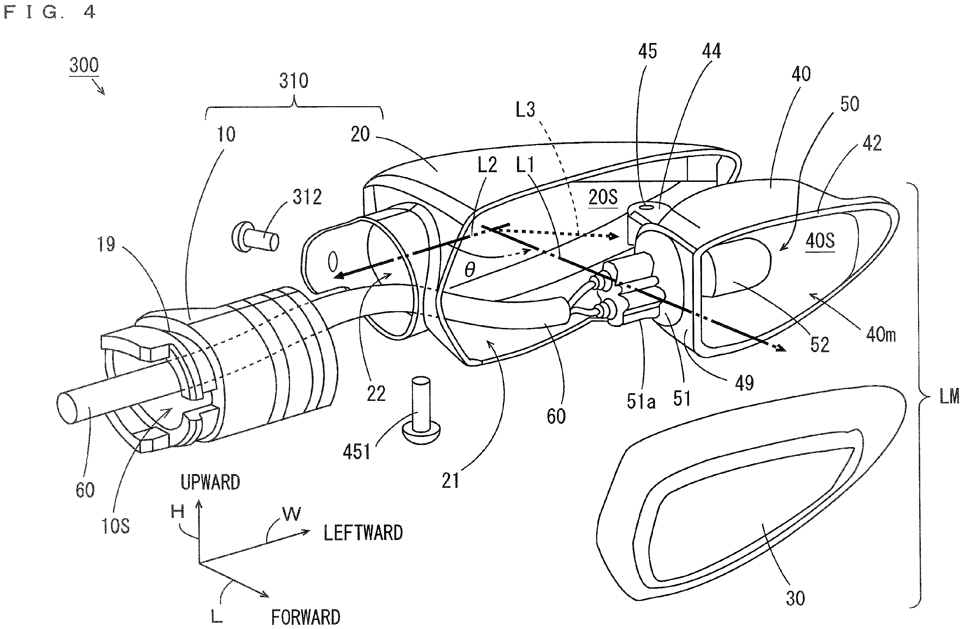

Fig. 3 is an external perspective view of the front left turn indicator lamp 300 of Figs. 1 and 2. Fig. 4 is an exploded perspective view of the turn indicator lamp 300 of Fig. 3.

As shown in Figs. 3 and 4, the turn indicator lamp 300 includes a main body member 310, a lens 30, a reflector member 40 and a light emitter 50 (Fig. 4). The main body member 310 is constituted by a main body supporter 10 and a main body storage 20.

The main body supporter 10 is a cylindrical member that extends from the right to the left, and formed of rubber or resin. An attachment portion 19 for attaching the turn indicator lamp 300 to the vehicle main body 200 (the head light cover 91 or the cover member 121 of Fig. 1) is formed at the right end of the main body supporter 10. Further, the main body supporter 10 has an inner space 10S that opens rightward and leftward. A wiring 60 is inserted into the inner space 10S from the right end of the main body supporter 10.

The main body storage 20 has a storage space 20S that can store the reflector member 40 and the light emitter 50. This main body storage 20 is formed of resin.

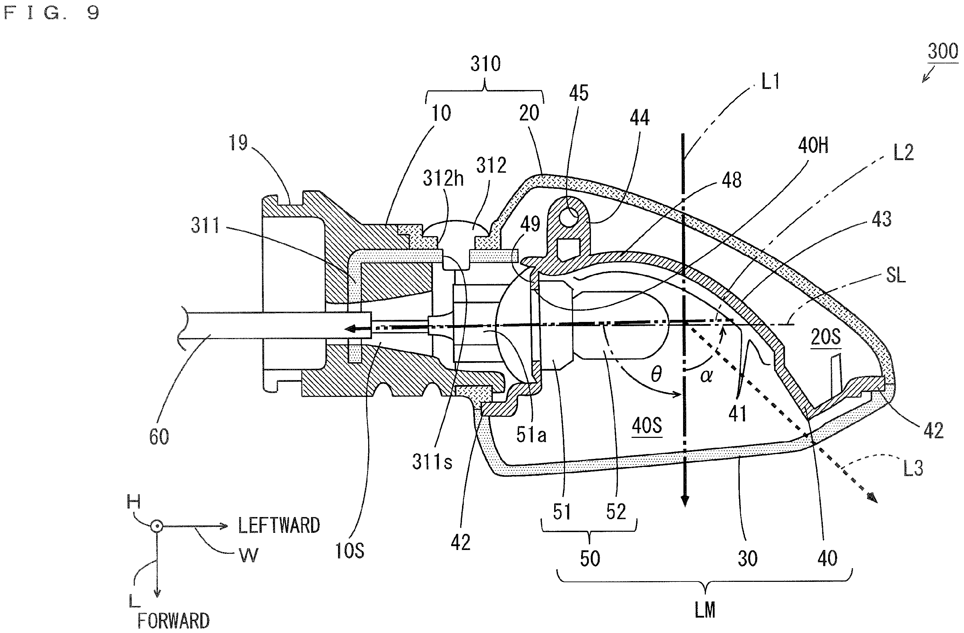

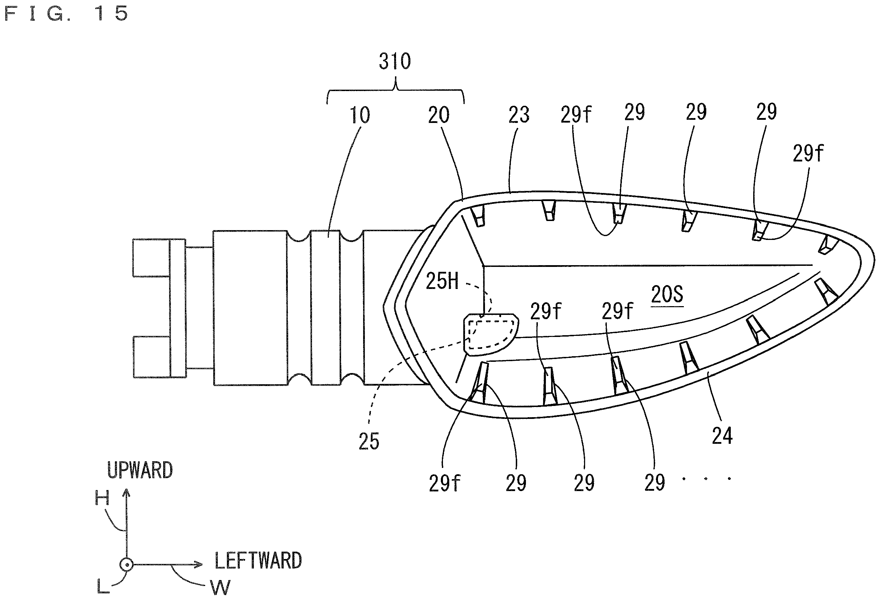

Further, the main body storage 20 has a first opening 21 directed forward and a second opening 22 directed rightward. In Fig. 4 and after-mentioned Figs. 9 and 15, a direction of opening L1 of the first opening 21 and a direction of opening L2 of the second opening 22 are indicated by the bold two-dot and dash line, respectively.

The right end of the main body storage 20 is attached to the left end of the main body supporter 10. In this state, the storage space 20S of the main body storage 20 communicates with the inner space 10S of the main body supporter 10 through the second opening 22.

The reflector member 40 is configured to be capable of supporting the light emitter 50. Details of the mounting structure of the light emitter 50 to the reflector member 40 are described below. The light emitter 50 includes a socket 51 and a bulb 52. The socket 51 has a wiring connector 51a to which the wiring 60 coming from the vehicle main body 200 is connected.

Further, the reflector member 40 has an emission space 40S that can store the bulb 52. The bulb 52 is positioned in the emission space 40S while the light emitter 50 is supported by the reflector member 40. The reflector member 40 has a reflector opening 40m directed forward. A lens supporter 42 is formed at the front end of the reflector member 40 to surround the reflector opening 40m.

The lens 30 is formed to be capable of closing the reflector opening 40m of the reflector member 40. This lens 30 is formed of permeable resin. The lens 30 is attached to the lens supporter 42 of the reflector member 40. In this state, the lens supporter 42 of the reflector member 40 supports the lens 30.

The light emitter 50 is supported at the reflector member 40, and the lens 30 is supported at the reflector member 40. In this case, the lens 30, the reflector member 40 and the light emitter 50 can be integrally handled as a light-emitting module LM. Therefore, the reflector member 40 can be stored in the storage space 20S of the main body storage 20 from the first opening 21 while the bulb 52 is positioned between the reflector member 40 and the lens 30. Further, the reflector member 40 stored in the storage space 20S can be taken out from the first opening 21.

In the turn indicator lamp 300 according to the present embodiment, the direction of opening L1 of the first opening 21 and the direction of opening L2 of the second opening 22 of the main body storage 20 intersect with each other in a plane parallel to the front and rear direction L and the width direction W. An angle θ, which the direction of opening L1 forms with respect to the direction of opening L2 is more than 0 degree and less than 180 degree. The angle θ is not less than 45 degrees and not more than 135 degrees, for example. The angle θ is preferably not less than 60 degrees and not more than 120 degrees, and more preferably not less than 80 degrees and not more than 100 degrees. In the present embodiment, the direction of opening L1 and the direction of opening L2 are substantially orthogonal to each other. Further, when the reflector member 40 is inserted in the storage space 20S, the reflector member 40 supports the light emitter 50 such that the wiring connector 51a of the light emitter 50 is positioned in the inner space 10S of the main body supporter 10.

Thus, at the time of replacement work of the bulb 52, an operator can remove the reflector member 40 from the main body storage 20 such that the reflector member 40 moves in a direction L3 inclined toward the opposite direction to the direction of opening L2 of the second opening 22 with respect to the direction of opening L1 of the first opening 21. In this case, the wiring connector 51a of the light emitter 50 is smoothly moved from the second opening 22 to pass the first opening 21 of the main body storage 20. Therefore, the operator can smoothly pull out the wiring 60 coming from the vehicle main body 200 with very little bending.

Further, after the replacement work of the bulb 52, the reflector member 40 can be stored in the storage space 20S of the main body storage 20 to be directed in the opposite direction to the direction L3 described above. In this case, the wiring connector 51a of the light emitter 50 is smoothly moved from the first opening 21 to pass the second opening 22 of the main body storage 20. Therefore, the operator can smoothly lead the wiring 60 coming from the vehicle main body 200 into the inner space 10S of the main body supporter 10 with very little bending.

As a result, the operator can easily and smoothly perform the replacement work of the bulb 52 without damaging the bulb 52.

The turn indicator lamp 300 of Fig. 3 is attached to the vehicle main body 200 such that the direction of opening L1 of the first opening 21 of the main body storage 20 is directed forward of the motorcycle 100. Thus, the light emitted from the bulb 52 and the light reflected from the reflection surface 41 of the reflector member 40 are emitted forward of the motorcycle 100 from the lens 30. Further, the turn indicator lamp 300 of Fig. 3 is attached to the vehicle main body 200 such that the direction of opening L2 of the second opening 22 of the main body storage 20 is directed rightward of the motorcycle 100. Thus, the operator can easily perform the replacement work of the bulb 52 on the left side of the vehicle main body 200.

In the example described above, the configuration of the front left turn indicator lamp 300 of Figs. 1 and 2 is described. On the other hand, the rear left turn indicator lamp 300 of Figs. 1 and 2 is configured such that the front and the rear of the turn indicator lamp 300 of Fig. 3 are reversed. In this case, the rear left turn indicator lamp 300 is attached to the vehicle main body 200 such that the direction of opening L1 of the first opening 21 of the main body storage 20 is directed rearward of the motorcycle 100. Thus, the light emitted from the bulb 52 and the light reflected from the reflection surface 41 of the reflector member 40 are emitted rearward of the motorcycle 100 through the lens 30.

Further, the front right turn indicator lamp 300 of Figs. 1 and 2 are configured such that the left and the right of the turn indicator lamp 300 of Fig. 3 are reversed. In this case, the front and right turn indicator lamp 300 is attached to the vehicle main body 200 such that the direction of opening L2 of the second opening 22 of the main body storage 20 is directed leftward of the motorcycle 100. Thus, the operator can easily perform the replacement work of the bulb 52 on the right side of the vehicle main body 200.

Further, the rear right turn indicator lamp 300 of Figs. 1 and 2 is configured such that the front and the rear of the turn indicator lamp 300 of Fig. 3 are reversed, and the right and the left of the turn indicator lamp 300 are reversed. In this case, the rear right turn indicator lamp 300 is attached to the vehicle main body 200 such that the direction of opening L1 of the first opening 21 of the main body storage 20 is directed rearward of the motorcycle 100 and the direction of opening L2 of the second opening 22 of the main body storage 20 is directed leftward of the motorcycle 100.

### (3) Detailed Configuration of Each Constituent Element

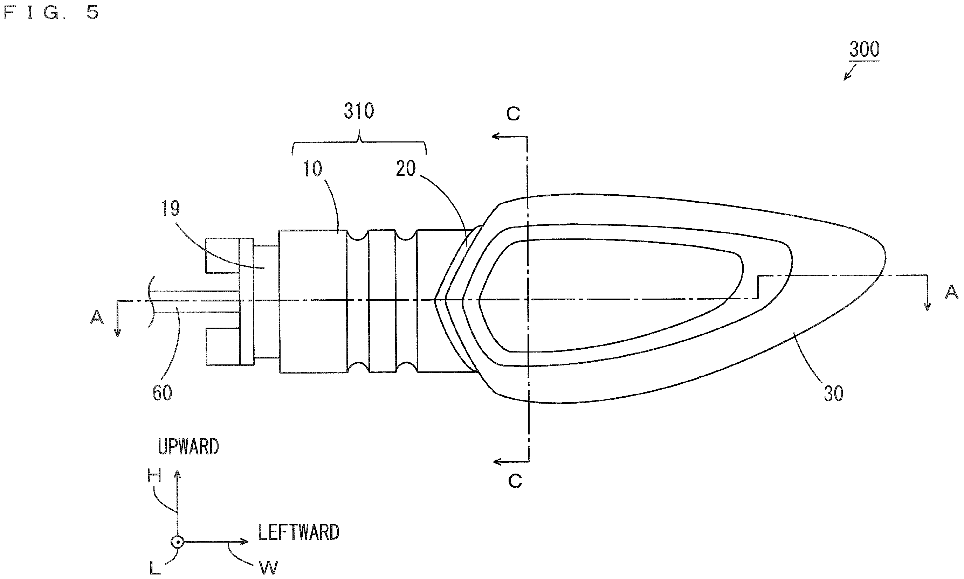

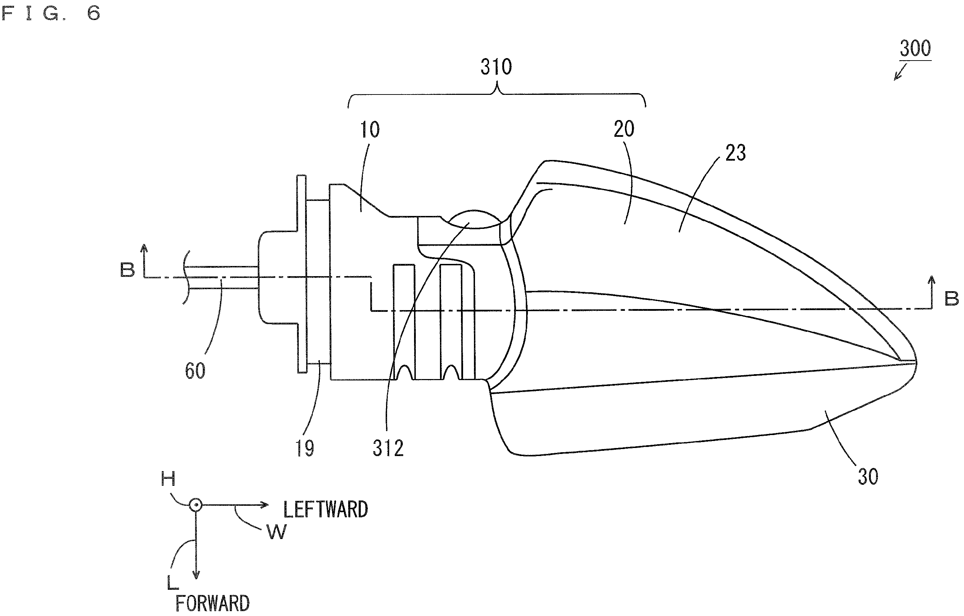

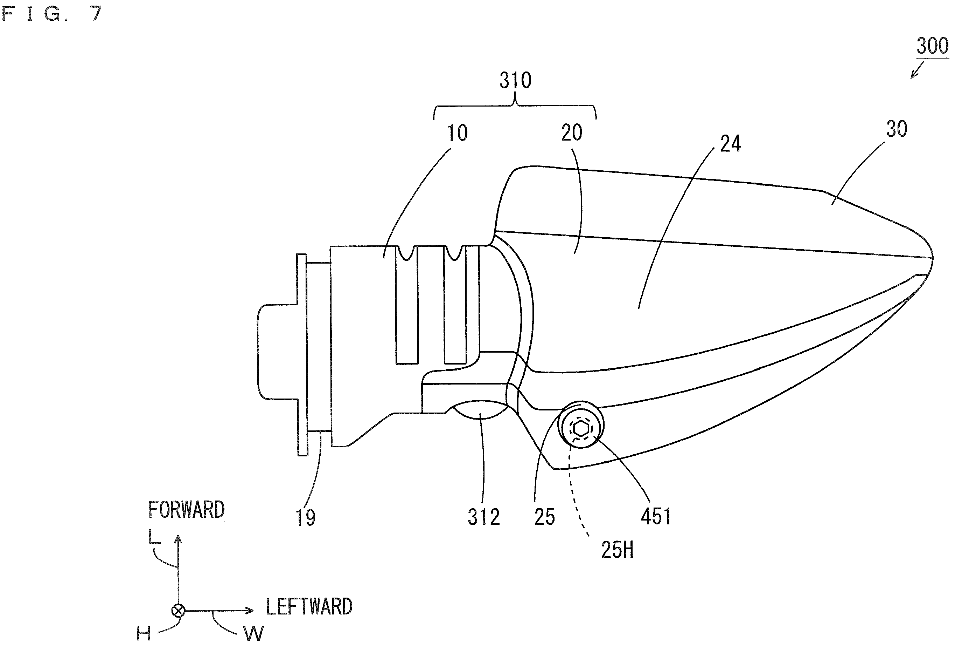

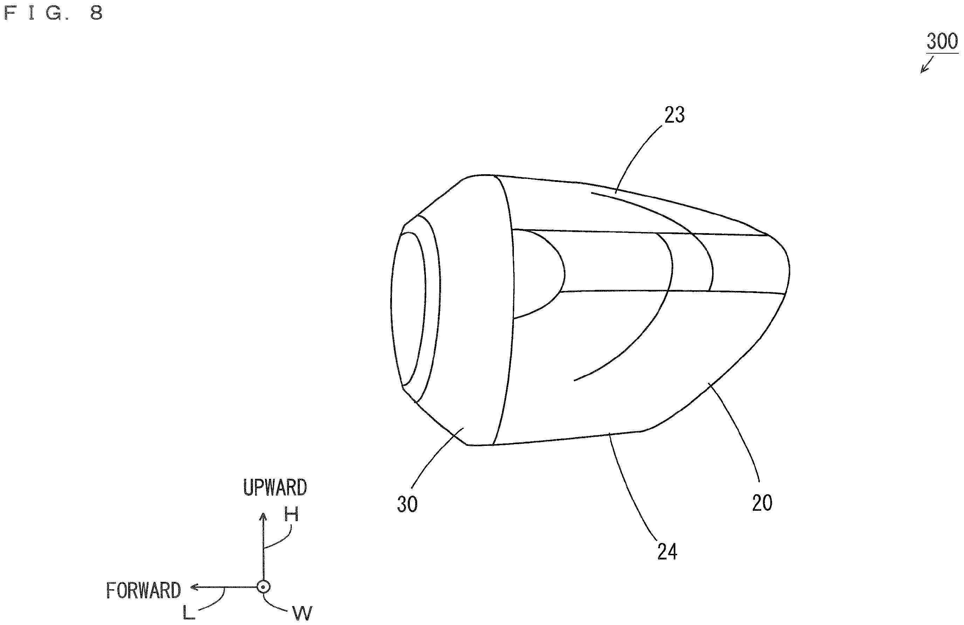

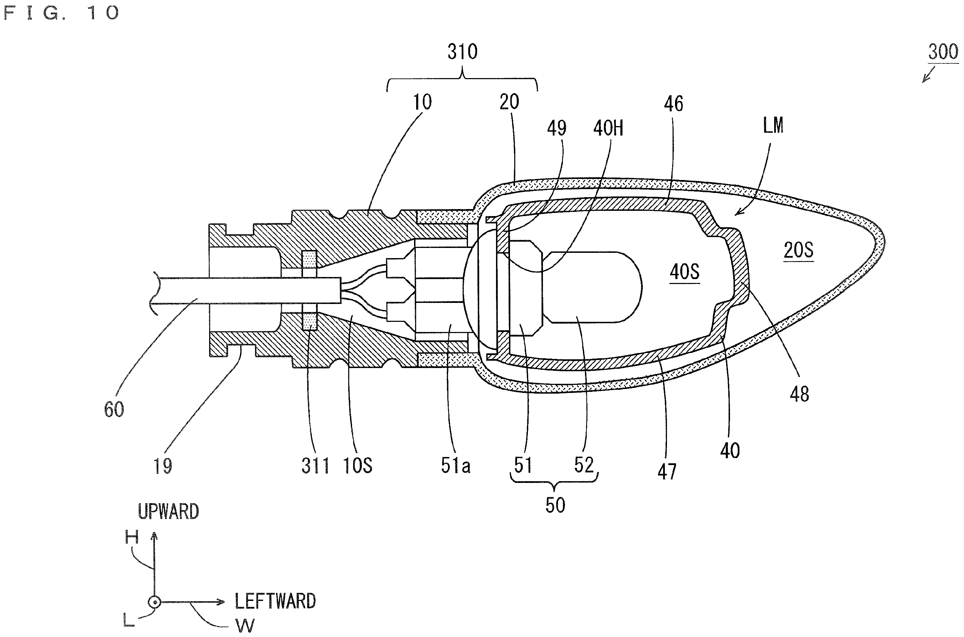

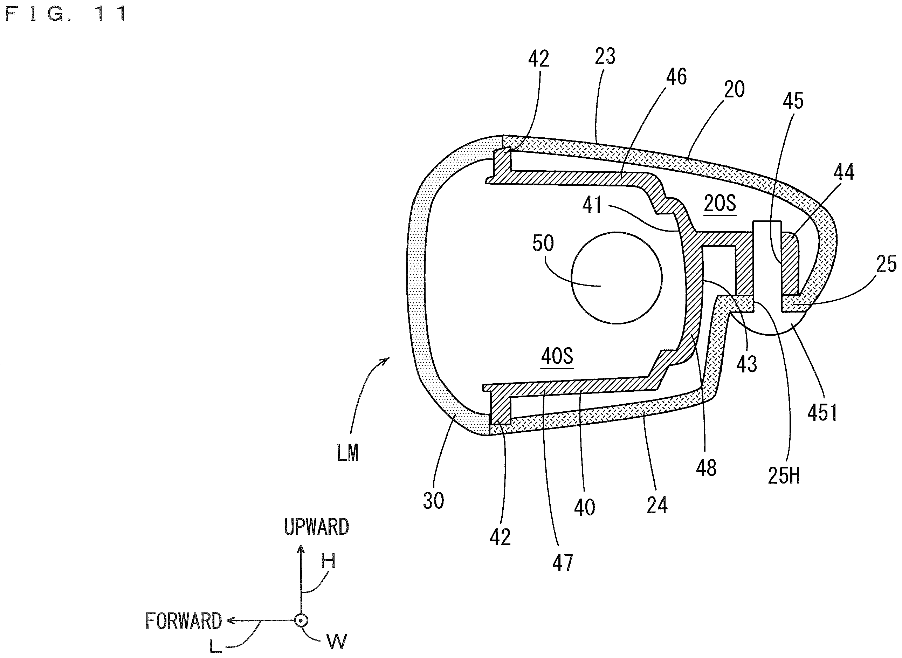

Details of each constituent element of the turn indicator lamp 300 of Fig. 3 will be described below. Fig. 5 is a front view of the turn indicator lamp 300 of Fig. 3, and Fig. 6 is a plan view of the turn indicator lamp 300 of Fig. 3. Further, Fig. 7 is a bottom view of the turn indicator lamp 300 of Fig. 3, and Fig. 8 is a side view of the turn indicator lamp 300 of Fig. 3 as viewed from the left side. Further, Fig. 9 is a transverse cross sectional view taken along the line A-A of the turn indicator lamp 300 of Fig. 5, and Fig. 10 is a vertical cross sectional view taken along the line B-B of the turn indicator lamp 300 of Fig. 6. Further, Fig. 11 is a vertical cross sectional view taken along the line C-C of the turn indicator lamp 300 of Fig. 5.

### (3-a) Main Body Supporter 10 and Main Body Storage 20

As shown in Figs. 6, 7 and 11, the main body storage 20 has a main body upper surface 23 directed upward, and a main body lower surface 24 directed downward. In the main body storage 20, the main body upper surface 23 and the main body lower surface 24 are integrally formed. A screw receiving surface 25 (Figs. 7 and 11) is formed at part of the main body lower surface 24. A through hole 25H is formed at the screw receiving surface 25. A bolt 451 is inserted into the through hole 25H.

As shown in Figs. 4, 6 and 7, the width of the main body storage 20 in the front and rear direction gradually decreases from the right to the left in the width direction W. Further, as shown in Fig. 8, the width of the main body storage 20 in the up-and-down direction gradually decreases from the front to the rear.

As shown in Fig. 9, part of a main body coupling metal hardware 311 having a L-shaped transverse cross section is embedded in the main body supporter 10. Another portion of the main body coupling metal hardware 311 projects leftward from the main body supporter 10. A screw hole 311s is formed at a portion of the main body coupling metal hardware 311 that projects from the main body supporter 10.

A screw insertion hole 312h that penetrates in the front and rear direction is formed in the vicinity of the right end of the main body storage 20. A bolt 312 is attached to the screw hole 311s through the screw insertion hole 312h of the main body storage 20 while the right end of the main body storage 20 is attached to the left end of the main body supporter 10. Thus, the main body storage 20 is firmly fixed to the main body supporter 10. In this state, the attachment portion 19 of the main body supporter 10 is attached to the vehicle main body 200, and the main body storage 20 is supported at the vehicle main body 200 by the main body supporter 10.

The coefficient of elasticity of the main body supporter 10 is preferably less than the coefficient of elasticity of the main body storage 20. In this case, the main body supporter 10 functions as a damper while the main body storage 20 is supported at the vehicle main body 200. Thus, vibration of the vehicle main body 200 is absorbed by the main body supporter 10 during traveling, whereby the vibration transmitted to the light emitter 50 in the main body storage 20 is attenuated. Therefore, damage to the light emitter 50 due to the vibration can be prevented.

### (3-b) Lens 30

As shown in Figs. 4 and 5, the width of the lens 30 in the up-and-down direction gradually decreases from the right to the left. Further, as shown in Figs. 6 and 7, the width of the lens 30 in the front and rear direction is substantially constant from the right to the left except for a specific range on the left side, and gradually decreases in the specific range on the left side. The rear outer peripheral edge of the lens 30 and its adjacent portions are attached to a lens supporter 42 (see Figs. 4, 9 and 11) of the reflector member 40 as described above.

The lens 30 and the reflector member 40 may be formed of the same resin material. In this case, the lens 30 and the reflector 40 may be bonded by welding. Thus, the lens 30 and the reflector member 40 are easily and reliably integrated while the reflector opening 40m of the reflector member 40 is closed by the lens 30. Further, the light emitter 50 arranged in the emission space 40S of the reflector member 40 can be protected from rain water or muddy water.

When the lens 30 and the reflector member 40 are formed of different resin materials, the lens 30 and the reflector member 40 may be bonded by an adhesive agent. Further, the lens 30 and the reflector member 40 may be bonded by a bolt. In this case, a contact portion between the lens 30 and the reflector member 40 is preferably sealed by a seal member.

### (3-c) Reflector Member 40

As shown in Figs. 4, 9 and 10, the reflector member 40 has a flat portion 49 parallel to the front and rear direction L and the up-and-down direction H on the right side. A light emitter support hole 40H (Fig. 9) is formed at the center of the flat portion 49. A central axis SL (Fig. 9) of the light emitter support hole 40H is inclined with respect to the direction of opening L1 of the first opening 21 while the reflector member 40 is fixed in the storage space 20S of the main body storage 20.

An inclination angle α of the central axis SL with respect to the direction of opening L1 of the first opening 21 is more than 0 degree and less than 180 degrees. The inclination angle α is not less than 45 degrees and not more than 135 degrees, for example. Preferably, the inclination angle α is not less than 60 degrees and not more than 120 degrees, and more preferably not less than 80 degrees and not more than 100 degrees. In the present embodiment, the central axis SL (Fig. 9) of the light emitter support hole 40H is substantially orthogonal to the direction of opening L1 of the first opening 21. Further, the light emitter support hole 40H is formed such that the wiring connecter 51a of the light emitter 50 supported in the storage space 20S is positioned in the inner space 10S of the main body supporter 10.

As shown in Figs. 9 and 11, the reflector member 40 has a curved portion 48. The curved portion 48 has the reflection surface 41 directed forward. The reflection surface 41 is configured to reflect the light generated from the after-mentioned bulb 52 forward. Further, the curved portion 48 has a reflector back surface 43 directed rearward.

A back surface projection 44 is formed to project rearward from part of the reflector back surface 43. A screw hole 45 that extends in the up-and-down direction is formed at the back surface projection 44.

At the time of attaching the light-emitting module LM to the main body storage 20, the reflector member 40 is stored in the storage space 20S, and the screw hole 45 of the reflector member 40 is positioned on the through hole 25H (Fig. 7) of the main body storage 20. In this state, the bolt 451 is attached to the screw hole 45 through the through hole 25H. Thus, the reflector member 40 is fixed in the storage space 20S of the main body storage 20.

By such a configuration, even if an allowance is provided between the measurement of the reflector member 40 and the measurement of the main body storage 20, the reflector member 40 can be firmly fixed in the storage space 20S of the main body storage 20 by fastening the bolt 451. Further, the reflector member 40 can be removed from the main body storage 20 with a small force by removing the bolt 451, so that the wiring 60 connected to the wiring connector 51a is prevented from being pulled out with a large force. Thus, damage to the wiring 60 can be prevented.

As shown in Figs. 10 and 11, the reflector 40 has a reflector upper surface 46 directed upward and a reflector lower surface 47 directed downward. In the reflector member 40, the lens supporter 42, the back surface projection 44, the reflector upper surface 46, the reflector lower surface 47, the curved portion 48 and the flat portion 49 are integrally formed.

As shown in Fig. 11, in the present embodiment, the emission space 40S is inside the reflector member 40, that is, a space behind the lens 30 and surrounded by the reflector upper surface 46, the reflector lower surface 47, the curved portion 48 and the flat portion 49 (see Fig. 10).

### (3-d) Light Emitter 50 and Wiring 60

As shown in Figs. 9 and 10, the light emitter 50 is constituted by the socket 51 and the bulb 52. The socket 51 includes the wiring connector 51a. One end of the wiring 60 coming from the vehicle main body 200 is connected to the wiring connector 51a.

Part of the socket 51 of the light emitter 50 is attached to the light emitter support hole 40H of the reflector member 40, so that the light emitter 50 is supported by the light emitter support hole 40H. The bulb 52 of the light emitter 50 is positioned behind the lens supporter 42 and in the emission space 40S inside the reflector member 40.

In this case, the distance between the bulb 52 and the lens 30 in the front and rear direction L is longer than the distance between the bulb 52 and the curved portion 48 of the reflector member 40. Therefore, the lens 30 is unlikely to be influenced by heat generated from the bulb 52 as compared to the reflector member 40. Thus, the lens 30 can be prevented from being melted by the heat generated from the bulb 52. Further, material that is less heat resistant than the material for the reflector member 40 can be used as the material for the lens 30.

Further, part of the wiring connecter 51a of the light emitter 50 is positioned in the inner space 10S of the main body supporter 10 while the light emitter 50 is supported by the light emitter support hole 40H. In this case, the wiring 60 coming from the vehicle main body 200 is led to the wiring connector 51a of the light emitter 50 through the inner space 10S. Thus, the wiring 60 is protected. Further, a distance between the light emitter 50 and the vehicle main body 200 becomes shorter, so that amplitude of the vibration of the light emitter 50 due to the vibration of the vehicle main body 200 can be reduced. As a result, damage to the light emitter 50 due to vibration can be prevented.

### (3-e) Mounting Structure of Light Emitter 50 to Reflector Member 40

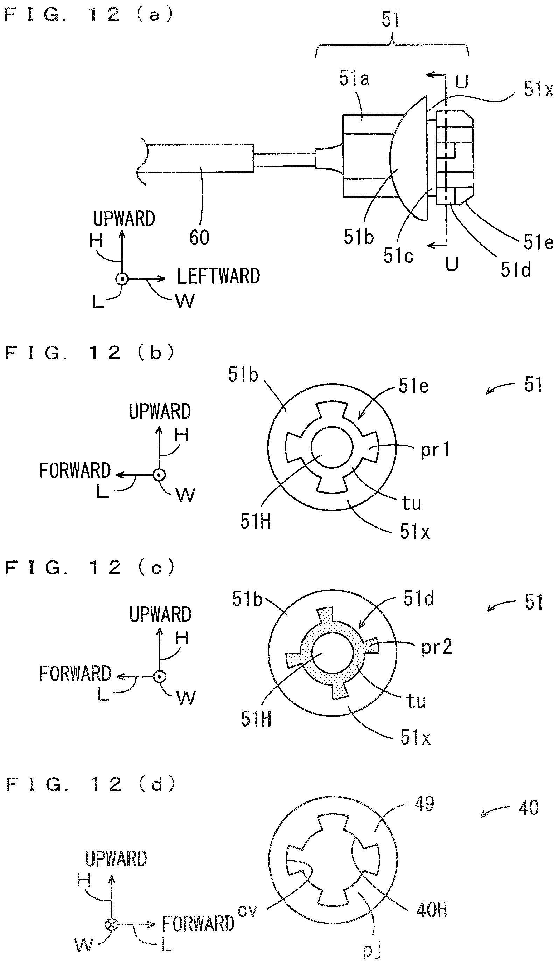

Figs. 12 (a) to (d) are diagrams showing the details of the mounting structure of the light emitter 50 to the reflector member 40. Fig. 12(a) shows a front view of the socket 51 of the light emitter 50. Fig. 12(b) shows a side view of the left side of the socket 51 of the light emitter 50 of Fig. 12(a). Fig. 12(c) shows a vertical cross sectional view taken along the line U-U of the socket 51 of the light emitter 50 of Fig. 12(a). Fig. 12(d) shows a side view of the right side of the light emitter support hole 40H of the reflector member 40 of Figs. 9 and 10.

As shown in Fig. 12(a), the wiring connector 51a, a flange portion 51b, a groove 51c, a rotation restrictor 51d and a fixing portion 51e are formed in this order from the right to the left in the socket 51. The flange portion 51b has a flat surface 51x parallel to the front and rear direction L and the up-and-down direction H.

As shown in Fig. 12(b), a bulb insertion hole 51H into which the bulb 52 is inserted is formed at the center of the socket 51 in a plane parallel to the front and rear direction L and the up-and-down direction H. The fixing portion 51e has a cylinder portion tu and four projections pr1. The four projections pr1 of the fixing portion 51e radially projects at equal angular intervals from the outer periphery of the cylinder portion tu.

As shown in Fig. 12(c), the rotation restrictor 51d has the cylinder portion tu and four projections pr2. The four projections pr2 of the rotation restrictor 51d radially projects at equal angular intervals from the outer periphery of the cylinder portion tu. The length of each projection pr2 in the circumferential direction of the cylinder portion tu is shorter than the length of each projection pr1 in the circumferential direction of the cylinder portion tu.

As shown in Fig. 12(d), the light emitter support hole 40H of the reflector member 40 has substantially the same outer shape as that of the fixing portion 51e of Fig. 12(b), and is formed such that the fixing portion 51e of the socket 51 can be inserted into the light emitter support hole 40H in the width direction W. The light emitter support hole 40H has four convex portions pj directed toward the center of the light emitter support hole 40H. A recess cv is formed in-between each of the two adjacent convex portions pj.

At the time of attachment of the light emitter 50 to the reflector member 40, the operator inserts the fixing portion 51e of the socket 51 of Fig. 12(b) into the light emitter support hole 40H of the reflector member 40 of Fig. 12(d). Thus, the peripheral edge of the flat surface 51x of the flange portion 51b abuts against the flat portion 49 of the reflector member 40.

Subsequently, the operator rotates the socket 51 in one direction around the central axis of the light emitter support hole 40H. Thus, the four projections pr2 of the rotation restrictor 51d respectively abut against the convex portions pj of the reflector member 40, so that the rotation of the socket 51 is restricted. In this state, the convex portions pj of the reflector member 40 are sandwiched by the four projections pr1 of the fixing portion 51e and the peripheral edge of the flat surface 51x of the flange portion 51b in the width direction W. In this manner, the socket 51 is supported by the light emitter support hole 40H of the reflector member 40.

At the time of removal of the light emitter 50 from the reflector member 40, the operator rotates the socket 51 in the opposite direction around the central axis of the light emitter support hole 40H. Thus, the four projections pr1 of the fixing portion 51e of Fig. 12(b) overlap with the four recesses cv of the light emitter support hole 40H of Fig. 12(d). In this state, the operator pulls out the fixing portion 51e of the socket 51 from the light emitter support hole 40H of the reflector member 40.

In the turn indicator lamp 300 according to the present embodiment, current is supplied to the bulb 52 of the light emitter 50 through the wiring 60, so that the bulb 52 emits light. The light emitted rearward from the bulb 52 is reflected by the reflection surface 41 of the reflector member 40. The light emitted forward from the bulb 52 and the light reflected by the reflection surface 41 of the reflector member 40 are emitted forward of the turn indicator lamp 300 from the lens 30.

### (4) Specific Example of Replacement Work of Bulb

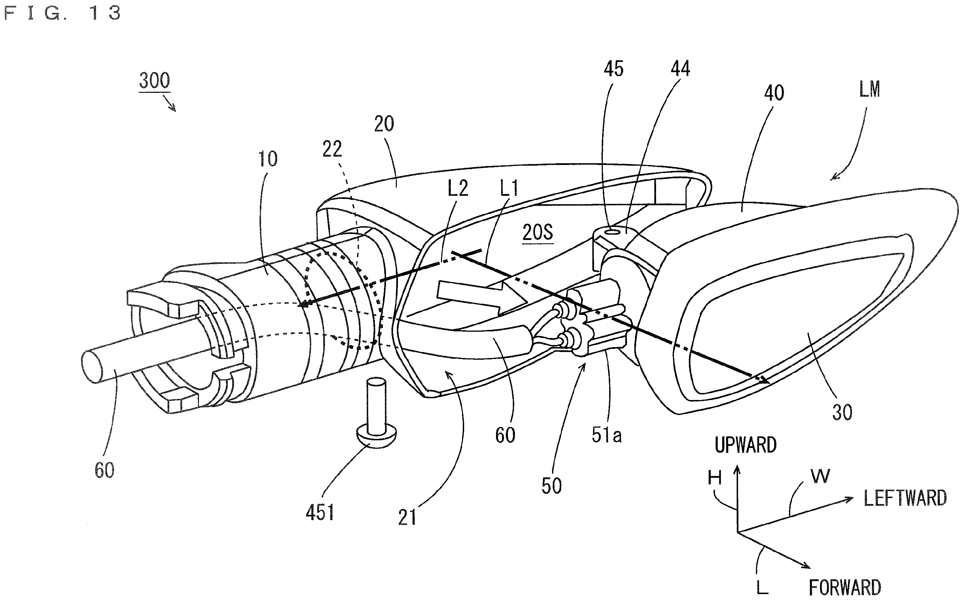

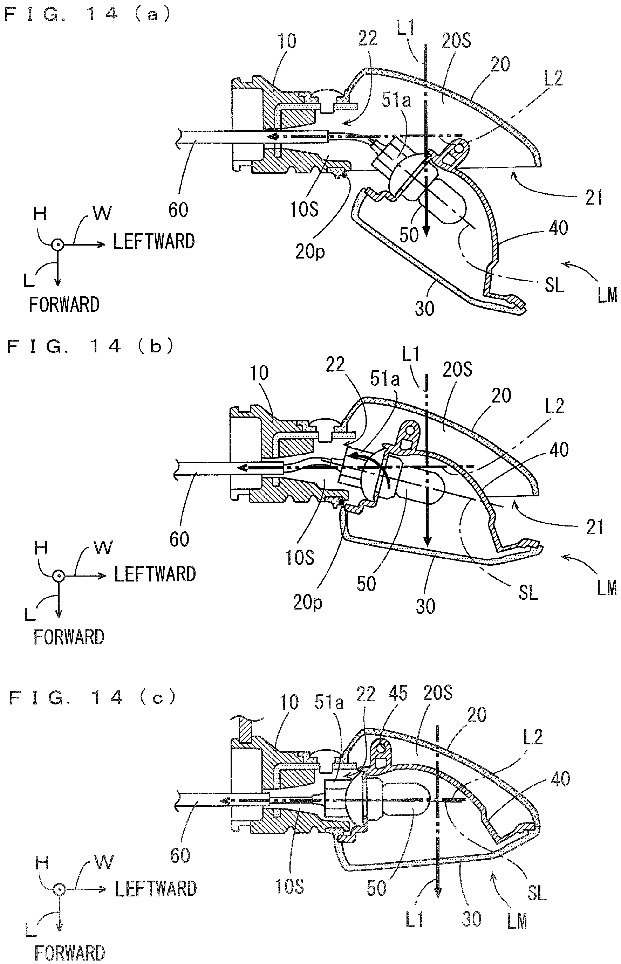

The specific example of the replacement work of the bulb 52 will be described below. Figs. 13 and 14 (a) to (c) are diagrams for explaining the replacement work of the bulb 52 in the turn indicator lamp 300 according to one embodiment of the present invention.

At the time of removing the bulb 52, the operator first removes the bolt 451 shown in Fig. 7, and removes the light-emitting module LM from the main body storage 20. Fig. 13 shows an external perspective view of the turn indicator lamp 300 when the light-emitting module LM is removed from the body storage 20.

As shown by the outlined arrow in Fig. 13, at the time of removing the bulb 52, the wiring 60 coming from the vehicle main body 200 is smoothly pulled out from the second opening 22 of the main body storage 20 in a direction directed between forward and leftward with very little bending. Thus, damage to the wiring 60 can be prevented.

Subsequently, the operator removes the light emitter 50 from the reflector member 40 as described with reference to Figs. 12 (a) to (d). Further, the operator removes the used bulb 52 from the socket 51. Thereafter, the operator attaches the new bulb 52 to the socket 51 by the reversed procedure as described with reference to Figs. 12 (a) to (d). Thus, the light emitter 50 is supported by the light emitter support hole 40H while the new bulb 52 is positioned in the emission space 40S of the reflector member 40.

As described above, in the present embodiment, it is possible to easily replace the bulb 52 without replacing the socket 51 and the wiring 60 by removing the bulb 52 from the socket 51.

Next, the operator attaches the light-emitting module LM that includes the new bulb 52 to the main body storage 20. Figs. 14(a), 14(b), 14(c) show the procedure when the light-emitting module LM is attached to the main body storage 20. The transverse cross sectional views of Figs. 14(a), 14(b), 14(c) correspond to the transverse cross sectional view of Fig. 9.

First, as shown in Fig. 14(a), the operator adjusts the direction of the reflector member 40 such that the wiring connector 51a of the light emitter 50 is directed toward the second opening 22 of the main body storage 20. Thereafter, the operator moves the reflector member 40 such that the reflector member 40 moves closer to a portion 20p of the main body storage 20. In this example, the portion 20p of the main body storage 20 is the closest portion to the main body supporter 10 in the inner periphery of the main body storage 20 that forms the first opening 21. At this time, the wiring 60 connected to the wiring connector 51a is smoothly led into the inner space 10S of the main body supporter 10 with very little bending.

Then, as shown in Fig. 14(b), the operator rotates the light-emitting module LM in a plane that includes the directions of openings L1, L2 of the first opening 21 and the second opening 22 with the portion 20p of the main body storage20 as a supporting point such that the wiring connector 51a moves toward the second opening 22 and the inner space 10S of the main body supporter 10.

Thus, as shown in Fig. 14(c), the reflector member 40 is stored in the storage space 20S of the main body storage 20. At the time of rotating the light-emitting module LM, the wiring connector 51a is positioned substantially in the second opening 22. Therefore, the wiring connector 51a of the light emitter 50 and the main body storage 20 do not interfere with each other, so that the wiring 60 is hardly bent. Therefore, the reflector member 40 can be easily stored in the storage space 20S of the main body storage 20 while the wiring 60 is smoothly led to the inner space 10S of the main body supporter 10. Thus, maintainability of the turn indicator lamp 300 is improved.

Finally, the operator attach the bolt 451 shown in Fig. 13 to the screw hole 45 of the reflector member 40 through the through hole 25H (Fig. 11) of the main body storage 20. In this manner, the lens 30, the reflector member 40 and the light emitter 50 are fixed to the main body storage 20.

In the turn indicator lamp 300 according to the present embodiment, a plurality of guide portions are provided at the inner surface of the main body storage 20 such that the replacement work of the bulb 52 can be easily and smoothly performed. Fig. 15 is a diagram showing the plurality of guide portions formed at the inner surface of the main body storage 20.

As shown in Fig. 15, the plurality (six in this example) of guide portions 29 that extend inward from the edge are provided at the inner surface of the main body upper surface 23 of the main body storage 20. Further, the plurality (six in this example) of guide portions 29 that extend inward from the edge are provided at the inner surface of the main body lower surface 24 of the main body storage 20.

Each of the plurality of guide portions 29 has an abutment surface 29f against which the outer surface of the reflector member 40 can abut. Further, in the main body storage 20, the inner surface of the main body upper surface 23 and the inner surface of the main body lower surface 24 are formed to gradually come closer to each other inward from the edge.

Thus, at the time of attachment of the light-emitting module LM to the main body storage 20, the outer surface of the reflector member 40 abuts against the abutment surfaces 29f of the plurality of the guide portions 29, so that the reflector member 40 is smoothly introduced to an appropriate position in the storage space 20S. Therefore, attachment work of the light-emitting module LM to the main body storage 20 becomes easier. As a result, maintainability of the turn indicator lamp 300 is improved.

### (5) Other Embodiments

While the main body supporter 10 and the main body storage 20 are formed of rubber or resin in the embodiment described above, the invention is not limited to this. The main body supporter 10 and the main body storage 20 may be formed of metal. In this case, the light-emitting module LM is firmly fixed to the vehicle main body 200 by the main body supporter 10 and the main body storage 20.

While the main body member 310 is constituted by the main body supporter 10 and the main body storage 20 individually formed in the embodiment described above, the invention is not limited to this. The main body member 310 may be fabricated by integrally forming the main body supporter 10 and the main body storage 20.

While the turn indicator lamp 300 is attached to the vehicle main body 200 such that the direction of opening L1 of the first opening 21 of the main body storage 20 is directed forward or rearward of the motorcycle 100 in the embodiment described above, the invention is not limited to this. The turn indicator lamp 300 may be attached to the vehicle main body 200 such that the direction of opening L1 of the first opening 21 is directed diagonally forward or diagonally rearward.

Further, while the turn indicator lamp 300 is attached to the vehicle main body 200 such that the direction of opening L2 of the second opening 22 of the main body storage 20 is directed rightward or leftward of the motorcycle 100 in the embodiment described above, the invention is not limited to this. The turn indicator lamp 300 may be attached to the vehicle main body 200 such that the direction of opening L2 of the second opening 22 is directed diagonally rightward or diagonally leftward.

While the embodiment described above is an example in which the present invention is applied to the motorcycle, the invention is not limited to this. The present invention may be applied to another saddle-straddling type motor vehicle such as a motor tricycle, an ATV (All Terrain Vehicle) or the like.

### (6) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the embodiment described above, the vehicle main body 200 is an example of a vehicle main body, the turn indicator lamp 300 is an example of a turn indicator lamp, the wiring 60 is an example of a wiring for a current supply, the wiring connector 51a is an example of a wiring connector and the light emitter 50 is an example of a light emitter.

Further, the reflection surface 41 is an example of a reflection surface, the reflector member 40 is an example of a reflector member, the lens 30 is an example of a lens, the main body storage 20 is an example of a storage, the main body supporter 10 is an example of a main body supporter and the main body member 310 is an example of a main body member.

Further, the direction directed forward in the front and rear direction L of Figs. 3 to 15 is an example of a first direction, the first opening 21 is an example of a first opening, the direction directed rightward in the width direction W of Figs. 3 to 15 is an example of a second direction and the second opening 22 is an example of a second opening.

Further, the light emitter support hole 40H is an example of a support hole, the central axis SL of the light emitter support hole 40H is an example of a central axis of a support hole, the lens supporter 42 is an example of a lens supporter, the inner space 10S of the main body supporter 10 is an example of a wiring storage space and the bolt 451 is an example of a bolt.

Further, the abutment surface 29f is an example of an abutment surface, the one portion 20p of the main body storage 20 is an example of a portion of the storage, the socket 51 is an example of a socket, the bulb 52 is an example of a bulb and the motorcycle 100 is an example of a saddle-straddling type motor vehicle.

As each of constituent elements recited in the claims, various other elements having configurations or functions described in the claims can be also used.

### INDUSTRIAL APPLICABILITY

This invention can be effectively utilized for a turn indicator lamp and a vehicle that includes the turn indicator lamp.

While preferred embodiments of the present invention have been described above, it is to be understood that variations and modifications will be apparent to those skilled in the art without departing the scope of the present invention, determined solely by the following claims.

## Claims

1. A turn indicator lamp (300) to be provided at a vehicle main body (200), comprising:
a light emitter (50) having a wiring connector (51a) to which a wiring (60) for a current supply is connected;
a reflector member (40) having a reflection surface (41) adapted to reflect light emitted from the light emitter (50);
a lens (30) supported at the reflector member (40) to be opposite to at least part of the reflection surface (41); and
a main body member (310) that includes a storage (20) with a storage space (20S) storing the reflector member (40) and at least part of the light emitter (50), and a main body supporter (10) to support the storage (20) at the vehicle main body (200), wherein
the storage (20) has a first opening (21) that opens in a first direction (L1) and a second opening (22) that opens in a second direction (L2) that intersects with the first direction, the storage space (20S) communicating with an inner space (10S) of the main body supporter (10) through the second opening (22),
the reflector member (40) has a support hole (40H), and the light emitter (50) is arranged in the support hole (40H) such that the light emitter (50) is supported by the support hole (40H),
the reflector member (40) is provided such that light emitted from the light emitter (50) and light reflected from the reflection surface (41) of the reflector member (40) are emitted to the outside through the lens (30)
from the first opening (21),
the support hole (40H) of the reflector member (40) is formed such that a central axis (SL) of the support hole (40H) is inclined with respect to the
first direction (L1) and part of the wiring connector (51a) of the light emitter (50) supported by the support hole (40H) is positioned in the inner space (10S) of the main body supporter (10) and in the second opening (22), and
the main body supporter (10) is configured to lead the wiring (60) coming from the vehicle main body (200) to the wiring connector (51a).

2. The turn indicator lamp (300) according to claim 1, wherein
the light emitter (50) includes a socket (51) including the wiring connector (51a) and a bulb (52) attached to the socket (51) to be attachable and detachable, and
the socket (51) is configured to be supportable at the support hole (40H) of the reflector member (40).

3. The turn indicator lamp (300) according to claim 2, wherein
the socket (51) and the bulb (52) are arranged to line up on a straight line that includes the
central axis (SL) of the support hole (40H) while the socket (51) to which the bulb (52) is attached is supported at the support hole (40H) of the reflector member (40).

4. The turn indicator lamp (300) according to claim 3, wherein
a portion of the wiring (60) connected to the wiring connector (51a) of the socket (51) extends on the straight line that includes the central axis (SL) of the support hole (40H) of the reflector member (40), or extends in parallel to the straight line that includes the central axis (SL) of the support hole (40H).

5. The turn indicator lamp (300) according to any one of claims 1 to 4, wherein
the lens (30), the light emitter (50) and the reflector member (40) are configured to be integrally attachable to and removable from the main body member (310).

6. The turn indicator lamp (300) according to any one of claims 1 to 5, wherein
the reflector member (40) and the lens (30) are bonded by welding.

7. The turn indicator lamp (300) according to any one of claims 1 to 6, wherein
the reflector member (40) has a lens supporter (42) that supports the lens (30), and
the light emitter (50) is supported by the support hole (40H) to be positioned further inside the reflector member (40) than the lens supporter (42) in the first direction.

8. The turn indicator lamp (300) according to any one of claims 1 to 7, wherein the inner space (10S) leads the wiring (60) coming from the vehicle main body (200) to the wiring connector (51a) and formed inside the main body supporter (10).

9. The turn indicator lamp (300) according to any one of claims 1 to 8, wherein
the storage (20) and the main body supporter (10) are constituted by members different from each other, and
a coefficient of elasticity of material for the main body supporter (10) is less than a coefficient of elasticity of material for the storage (20).

10. The turn indicator lamp (300) according to any one of claims 1 to 9, wherein the reflector member (40) is fixed to the main body member (310) by a bolt (451).

11. The turn indicator lamp (300) according to any one of claims 1 to 10, wherein
an abutment surface (29f) that abuts against a surface of the reflector member (40) is formed at a surface of the storage(20), and
the storage (20) is formed such that at least part of a portion opposite to the abutment surface (29f) gradually comes closer to the abutment surface (29f) inward from the first opening (21).

12. The turn indicator lamp (300) according to claim 11, wherein
the reflector member (40) is configured to be attachable to the main body member (310) such that the wiring connector (51a) of the light emitter (50) supported by the support hole (40H) is rotated in a plane that includes the first and second directions with a portion of the storage (20) as a supporting point while being inserted into the second opening (22).

13. A saddle-straddling type motor vehicle (100) comprising:
a vehicle main body (200); and
a turn indicator lamp (300) according to any one of claims 1 to 12 provided at the vehicle main body (200).

14. The saddle-straddling type motor vehicle (100) according to claim 13, wherein
the first direction is a forward direction or a rearward direction of the vehicle main body (200), and
the second direction is a rightward direction or a leftward direction of the vehicle main body (200).

## Patentansprüche

1. Eine Blinkerlampe (300), die an einem Fahrzeughauptkörper (200) vorgesehen sein soll, die folgende Merkmale aufweist:
einen Lichtemitter (50) mit einem Verdrahtungsverbinder (51a), mit dem eine Verdrahtung (60) für eine Stromversorgung verbunden ist;
ein Reflektorbauteil (40) mit einer Reflexionsoberfläche (41), das angepasst ist, um Licht zu reflektieren, das aus dem Lichtemitter (50) emittiert wird;
eine Linse (30), die an dem Reflektorbauteil (40) gegenüber von zumindest einem Teil der Reflexionsoberfläche (41) getragen wird; und
ein Hauptkörperbauteil (310), das einen Speicher (20) mit einem Speicherraum (20S), der das Reflektorbauteil (40) und zumindest einen Teil des Lichtemitters (50) speichert, und einen Hauptkörperträger (10) zum Tragen des Speichers (20) an dem Fahrzeughauptkörper (20) aufweist, wobei:
der Speicher (20) eine erste Öffnung (21), die sich in einer ersten Richtung (L1) öffnet, und eine zweite Öffnung (22) aufweist, die sich in einer zweiten Richtung (L2) öffnet, die die erste Richtung schneidet, wobei der Speicherraum (20S) mit einem Innenraum (10S) des Hauptkörperträgers (10) durch die zweite Öffnung (22) in Verbindung steht,
das Reflektorbauteil (40) ein Trägerloch (40H) aufweist und der Lichtemitter (50) derart in dem Trägerloch (40H) angeordnet ist, dass der Lichtemitter (50) durch das Trägerloch (40H) getragen wird,
das Reflektorbauteil (40) derart vorgesehen ist, dass Licht, das aus dem Lichtemitter (50) emittiert wird, und Licht, das von der Reflexionsoberfläche (41) des Reflektorbauteils (40) reflektiert wird, aus der ersten Öffnung (21) durch die Linse (30) nach außen emittiert werden,
das Trägerloch (40H) des Reflektorbauteils (40) derart gebildet ist, dass eine Mittelachse (SL) des Trägerlochs (40H) in Bezug auf die erste Richtung (L1) geneigt ist und ein Teil des Verdrahtungsverbinders (51a) des Lichtemitters (50), der durch das Trägerloch (40H) getragen wird, im Innenraum (10S) des Hauptkörperträgers (10) und in der zweiten Öffnung (22) positioniert ist, und
der Hauptkörperträger (10) ausgebildet ist, um die Verdrahtung (60), die von dem Fahrzeughauptkörper (200) kommt, zu dem Verdrahtungsverbinder (51a) zu führen.

2. Die Blinkerlampe (300) gemäß Anspruch 1, bei der:
der Lichtemitter (50) eine Fassung (51) mit dem Verdrahtungsverbinder (51a) und eine Glühlampe (52), die an der Fassung (51) anbringbar und lösbar angebracht ist, aufweist und die Fassung (51) so ausgebildet ist, dass sie an dem Trägerloch (40H) des Reflektorbauteils (40) getragen werden kann.

3. Die Blinkerlampe (300) gemäß Anspruch 2, bei der die Fassung (1) und die Glühlampe (52) so angeordnet sind, dass sie auf einer geraden Linie liegen, die die Mittelachse (SL) des Trägerlochs (40H) beinhaltet, während die Fassung (51), an der die Glühlampe (52) angebracht ist, an dem Trägerloch (40H) des Reflektorbauteils (40) getragen wird.

4. Die Blinkerlampe (300) gemäß Anspruch 3, bei der:
ein Abschnitt der Verdrahtung (60), der mit dem Verdrahtungsverbinder (51a) der Fassung (51) verbunden ist, sich an der geraden Linie erstreckt, die die Mittelachse (SL) des Trägerlochs (40H) des Reflektorbauteils (40) beinhaltet, oder sich parallel zu der geraden Linie erstreckt, die die Mittelachse (SL) des Trägerlochs (40H) aufweist.

5. Die Blinkerlampe (300) gemäß einem der Ansprüche 1 bis 4, bei der:
die Linse (30), der Lichtemitter (50) und das Reflektorbauteil (40) so ausgebildet sind, dass sie einstückig an dem Hauptkörperbauteil (310) anbringbar und aus/von demselben entfernbar sind.

6. Die Blinkerlampe (300) gemäß einem der Ansprüche 1 bis 5, bei der:
das Reflektorbauteil (40) und die Linse (30) durch Schweißen verbunden sind.

7. Die Blinkerlampe (300) gemäß einem der Ansprüche 1 bis 6, bei der:
das Reflektorbauteil (40) einen Linsenträger (42) aufweist, der die Linse (30) träger, und
der Lichtemitter (50) durch das Trägerloch (40H) so getragen wird, dass er in der ersten Richtung weiter im Inneren des Reflektorbauteils (40) positioniert ist als der Linsenträger (42).

8. Die Blinkerlampe (300) gemäß einem der Ansprüche 1 bis 7, bei der:
der Innenraum (10S) die Verdrahtung (60), die von dem Fahrzeughauptkörper (200) kommt, zu dem Verdrahtungsverbinder (51a) führt und im Inneren des Hauptkörperträgers (10) gebildet ist.

9. Die Blinkerlampe (300) gemäß einem der Ansprüche 1 bis 8, bei der:
der Speicher (20) und der Hauptkörperträger (10) durch voneinander unterschiedliche Bauteile gebildet sind und
ein Elastizitätskoeffizient des Materials für den Hauptkörperträger (10) kleiner ist als ein Elastizitätskoeffizient des Materials für den Speicher (20).

10. Die Blinkerlampe (300) gemäß einem der Ansprüche 1 bis 9, bei der:
das Reflektorbauteil (40) durch einen Bolzen (451) an dem Hauptkörperbauteil (310) fixiert ist.

11. Die Blinkerlampe (300) gemäß einem der Ansprüche 1 bis 10, bei der:
eine Anstoßoberfläche (29f), die gegen eine Oberfläche des Reflektorbauteils (40) anstößt, an einer Oberfläche des Speichers (20) gebildet ist und
der Speicher (20) derart gebildet ist, dass zumindest ein Teil eines Abschnitts gegenüber von der Anstoßoberfläche (29f) von der ersten Öffnung (21) nach innen allmählich näher an die Anstoßoberfläche (29f) gelangt.

12. Die Blinkerlampe (300) gemäß Anspruch 11, bei der:
das Reflektorbauteil (40) so ausgebildet ist, dass es derart an dem Hauptkörperbauteil (310) anbringbar ist, dass der Verdrahtungsverbinder (51a) des Lichtemitters (50), der durch das Trägerloch (40H) getragen wird, in einer Ebene gedreht ist, die die erste und die zweite Richtung beinhaltet, mit einem Abschnitt des Speichers (20) als Trägerpunkt während der Einführung in die zweite Öffnung (22).

13. Ein Sattel-Grätsch-Typ-Motorfahrzeug (100), das folgende Merkmale aufweist:
einen Fahrzeughauptkörper (200); und
eine Blinkerlampe (300) gemäß einem der Ansprüche 1 bis 12, die an dem Fahrzeughauptkörper (200) vorgesehen ist.

14. Das Sattel-Grätsch-Typ-Motorfahrzeug (100) gemäß Anspruch 13, bei dem:
die erste Richtung eine Vorwärtsrichtung oder eine Rückwärtsrichtung des Fahrzeughauptkörpers (200) ist und
die zweite Richtung eine rechtsgerichtete Richtung oder eine linksgerichtete Richtung des Fahrzeughauptkörpers (200) ist.

## Revendications

1. Feu de changement de direction (300) à prévoir sur une carrosserie principale de véhicule (200), comprenant:
un émetteur de lumière (50) présentant un connecteur de câblage (51a) auquel est connecté un câblage (60) pour une alimentation de courant;
un élément réflecteur (40) présentant une surface de réflexion (41) adaptée pour réfléchir la lumière émise par l'émetteur de lumière (50);
une lentille (30) supportée sur l'élément réflecteur (40) de manière à être opposée à au moins une partie de la surface de réflexion (41); et
un élément de carrosserie principale (310) qui comporte un boîtier (20) avec un espace de logement (20S) abritant l'élément réflecteur (40) et au moins une partie de l'émetteur de lumière (50), et un support de carrosserie principale (10) destiné à supporter le boîtier (20) sur la carrosserie principale de véhicule (200),
dans lequel
le boîtier (20) présente une première ouverture (21) qui s'ouvre dans une première direction (L1) et une deuxième ouverture (22) qui s'ouvre dans une deuxième direction (L2) qui vient en intersection avec la première direction, l'espace de logement (20S) communiquant avec un espace intérieur (10S) du support de carrosserie principale (10) à travers la deuxième ouverture (22),
l'élément réflecteur (40) présente un trou de support (40H), et l'émetteur de lumière (50) est disposé dans le trou de support (40H) de sorte que l'émetteur de lumière (50) soit supporté par le trou de support (40H),
l'élément réflecteur (40) est prévu de sorte que la lumière émise par l'émetteur de lumière (50) et la lumière réfléchie par la surface de réflexion (41) de l'élément réflecteur (40) soient émises vers l'extérieur à travers la lentille (30) à partir de la première ouverture (21),
le trou de support (40H) de l'élément réflecteur (40) est formé de sorte qu'un axe central (SL) du trou de support (40H) soit incliné par rapport à la première direction (L1) et une partie du connecteur de câblage (51a) de l'émetteur de lumière (50) supporté par le trou de support (40H) soit positionnée dans l'espace intérieur (10S) du support de carrosserie principale (10) et dans la deuxième ouverture (22), et
le support de carrosserie principale (10) est configuré pour conduire le câblage (60) provenant de la carrosserie principale de véhicule (200) vers le connecteur de câblage (51a).

2. Feu de changement de direction (300) selon la revendication 1, dans lequel
l'émetteur de lumière (50) comporte une douille (51) comportant le connecteur de câblage (51a) et une ampoule (52) fixée à la douille (51) de manière à pouvoir être fixée et enlevée, et
la douille (51) est configurée de manière à pouvoir être supportée sur le trou de support (40H) de l'élément réflecteur (40).

3. Feu de changement de direction (300) selon la revendication 2, dans lequel
la douille (51) et l'ampoule (52) sont disposées de manière à s'aligner sur une ligne droite qui comporte l'axe central (SL) du trou de support (40H), tandis que la douille (51) à laquelle est fixée l'ampoule (52) est supportée sur le trou de support (40H) de l'élément réflecteur (40).

4. Feu de changement de direction (300) selon la revendication 3, dans lequel
une partie du câblage (60) connectée au connecteur de câblage (51a) de la douille (51) s'étend sur la ligne droite qui comporte l'axe central (SL) du trou de support (40H) de l'élément réflecteur (40), ou s'étend parallèlement à la ligne droite qui comporte l'axe central (SL) du trou de support (40H).

5. Feu de changement de direction (300) selon l'une quelconque des revendications 1 à 4, dans lequel
la lentille (30), l'émetteur de lumière (50) et l'élément réflecteur (40) sont configurés de manière à pouvoir être fixés de manière solidaire à et enlevés de l'élément de carrosserie principale (310).

6. Feu de changement de direction (300) selon l'une quelconque des revendications 1 à 5, dans lequel
l'élément réflecteur (40) et la lentille (30) sont assemblés par soudure.

7. Feu de changement de direction (300) selon l'une quelconque des revendications 1 à 6, dans lequel
l'élément réflecteur (40) présente un support de lentille (42) qui supporte la lentille (30), et
l'émetteur de lumière (50) est supporté par le trou de support (40H) de manière à être positionné plus à l'intérieur de l'élément réflecteur (40) que le support de lentille (42) dans la première direction.

8. Feu de changement de direction (300) selon l'une quelconque des revendications 1 à 7, dans lequel
l'espace intérieur (10S) conduit le câblage (60) venant de la carrosserie principale de véhicule (200) au connecteur de câblage (51a) et est formé à l'intérieur du support de carrosserie principale (10).

9. Feu de changement de direction (300) selon l'une quelconque des revendications 1 à 8, dans lequel
Le boîtier (20) et le support de carrosserie principale (10) sont composés d'éléments différents l'un de l'autre, et
un coefficient d'élasticité de matériau pour le support de carrosserie principale (10) est inférieur à un coefficient d'élasticité de matériau pour le boîtier (20).

10. Feu de changement de direction (300) selon l'une quelconque des revendications 1 à 9, dans lequel
l'élément réflecteur (40) est fixé à l'élément de carrosserie principale (310) par un boulon (451).

11. Feu de changement de direction (300) selon l'une quelconque des revendications 1 à 10, dans lequel
une surface de butée (29f) qui vient en butée contre une surface de l'élément réflecteur (40) est formée sur une surface du boîtier (20), et
le boîtier (20) est formé de sorte qu'au moins une portion d'une partie opposée à la surface de butée (29f) se rapproche de la surface de butée (29f) vers l'intérieur depuis la première ouverture (21).

12. Feu de changement de direction (300) selon la revendication 11, dans lequel
l'élément réflecteur (40) est configuré de manière à pouvoir être fixé à l'élément de carrosserie principale (310) de sorte que le connecteur de câblage (51a) de l'émetteur de lumière (50) supporté par le trou de support (40H) tourne dans un plan qui comporte les première et deuxième directions avec une partie du boîtier (20) comme point de support, tout en étant introduite dans la deuxième ouverture (22).

13. Véhicule à moteur de type à selle (100), comprenant:
une carrosserie principale de véhicule (200); et
un feu de changement de direction (300) selon l'une quelconque des revendications 1 à 12 prévu sur la carrosserie principale de véhicule (200) .

14. Véhicule à moteur de type à selle (100) selon la revendication 13, dans lequel
la première direction est une direction avant ou une direction arrière de la carrosserie principale de véhicule (200), et
la deuxième direction est une direction à droite ou à gauche de la carrosserie principale de véhicule (200).
